# EUROPEAN PATENT SPECIFICATION

(11) **EP 2 953 328 B1**
(45) Date of publication and mention of the grant of the patent: **05.12.2018**
(21) Application number: 14290164.4
(22) Date of filing: 05.06.2014
(51) Int. Cl.: H04L 29/12

(54) **GENERATION OF A NETWORK ADDRESS BASED ON OPERATING CONDITION PARAMETERS**
GENERIERUNG EINER NETZWERKADRESSE AUF BASIS MEHRERER BETRIEBSZUSTAND-PARAMETER
GÉNÉRATION D'UNE ADRESSE DE RÉSEAU SUR LA BASE DES PARAMÈTRES D'ÉTAT DE FONCTIONNEMENT

(43) Date of publication of application: 09.12.2015
(73) Proprietor: Alcatel Lucent, 91620 Nozay (FR)
(72) Inventor: Stocker, Klaus E., 70435 Stuttgart (DE); Templ, Wolfgang, 70435 Stuttgart (DE); Kopp, Dieter, 70435 Stuttgart (DE)
(74) Representative: Nokia EPO representatives

(56) References cited:
- WO-A2-01/22656
- US-A1- 2008 008 179
- US-A1- 2012 066 356
- NARTEN IBM CORPORATION R DRAVES MICROSOFT RESEARCH S KRISHNAN ERICSSON RESEARCH T: "Privacy Extensions for Stateless Address Autoconfiguration in IPv6; rfc4941.txt", INTERNET X.509 PUBLIC KEY INFRASTRUCTURE CERTIFICATE AND CERTIFICATE REVOCATION LIST (CRL) PROFILE; RFC5280.TXT, INTERNET SOCIETY (ISOC) 4, RUE DES FALAISES CH- 1205 GENEVA, SWITZERLAND, CH, 1 September 2007 (2007-09-01), XP015052477, ISSN: 0000-0003
- EASTLAKE D ET AL: "Randomness Requirements for Security (RFC 4086)", INTERNET X.509 PUBLIC KEY INFRASTRUCTURE CERTIFICATE AND CERTIFICATE REVOCATION LIST (CRL) PROFILE; RFC5280.TXT, INTERNET SOCIETY (ISOC) 4, RUE DES FALAISES CH- 1205 GENEVA, SWITZERLAND, CH, 1 June 2005 (2005-06-01), XP015041913, ISSN: 0000-0003

## Description

### Technical Field

The disclosure relates to telecommunication systems, and more particularly to a method for operating a communication device.

### Background

The so-called Internet of Things, Car-to-X, Machine-to-X, etc., is developing further, creating communication needs to a level orders of magnitude higher than the communication traffic that is known today with IP-communication. Indeed, it is predicted that 10X to 100X machines/devices per users will be deployed by 2020 compared to X machines/devices per user today. Therefore, there is a need to improve the current communication methods in order to control this predicted increase in the number of communication devices.

Patent Application WO01/22656 discloses a device in which an address is generated based on its geographical position. RFCs 4941 and 4086 disclose techniques for generating an address identifier starting using external sensor's status.

### Summary

Various embodiments provide a method and apparatus for operating a communication device as described by the subject matter of the independent claims. Advantageous embodiments are described in the dependent claims.

In some embodiments, a method for operating a first communication device in a communication system is disclosed. The method comprises generating, by the first communication device, a source identification address for communication with the first communication device, the source identification address being indicative of at least one value of an operating condition parameter of the first communication device.

The source identification address may be automatically generated by the first communication device. The operating condition parameter may be a predetermined condition parameter. For example, the first communication device may select the operating condition parameter from a list of operating condition parameters. The list of the operating condition parameters may be stored in the first communication device.

The source identification address may be a network independent address, i.e., may not comprise an indication of a network of the communication system even if the first communication system is connected to said network. In an alternative example, the source identification address may comprise in addition to the indication of the operating condition parameter a network address indicative of the network to which the first communication device is connected. The network address may comprise an IP address (e.g., determined in accordance with IP-v6), a Fiber Channel Address and/or an URL. The network address may be stored in the first communication device before the generation of the source identification address.

The source identification address may be generated from a determined or measured value of the operating condition parameter. The source identification address may comprise a unique identifier that indicates the operating condition parameter. The source identification address may comprise a unique ID generated from a value of the operating condition parameter.

For example, the source identification address may be dynamically generated. An operation preformed "dynamically" refers to an operation that is performed based on a decision made while the first communication device is running rather than beforehand. For example, the expression "an address is dynamical generated" means that the address is created when actually needed, not reserved ahead of time. The source identification address may be repeatedly generated. In another example, the source identification address may be generated upon receiving a request by the first communication device to generate it. The request may be received, for example, from a user of the first communication device and/or a control unit of the communication system.

The source identification address may be generated irrespective of the first communication device being connected to a network or not being connected to a network or changing connection to another network. For example, while connected to a network of the communication system the first communication device may generate multiple source identification addresses.

The operating condition parameter may be a property and/or derived from a property of the first communication device.

The operating condition parameter may be a parameter whose change in value (e.g., from a nominal or predetermined value) triggers the generation of the first communication address. The operating condition parameter may indicate past, current and/or future operating conditions of the first communication device. The operating condition parameter may define a functioning status or condition describing the behavior and/or the function of the first communication device. The first communication device may measure the operating condition parameter.

The communication system may comprise an internet of things system, a machine to machine communication system, a Nearfield Communication system like a Bluetooth or WiFi system, a Wireless Mesh Networks system, an ad-hoc network system, a satellite communication system and/or a digital direct wireless communication system that permits direct, point-to-point communication (voice or data) between transceivers without the infrastructure associated with traditional cellular systems.

The first communication device may comprise at least one of a sensor, mobile phone, measuring device, smartphone, PDA, a laptop, a smart TV and/or any device able to communicate data through a radio link.

The above features may allow a controlled communication in the communication system. For example, a selective communication based on the properties of a communication device may be used e.g. only communication devices having the same property (e.g. temperature sensors) may communicate to each other. That is; in one example, the operating condition parameter may indicate whether a first communication device includes a temperature sensor.

Another advantage may reside in the fact that the above features may provide a decentralized approach for managing communications inside the communication system as every device may generate its own address without passing through a central server. Also, every device may generate a destination address that matches a source address of at least another device of the communication system. This may thus reduce the traffic flows in the communication system. This is especially important as the current communication systems connect a huge amount of machines and it is predicted that the number of machines/sensors per users deployed in the near future will increase by a factor of 10X to 100X.

The above features may save time (e.g., inquiry time) and processing resources that would otherwise be required by a central generation of the addresses, which requires extra communications between the first communication device and the central address providers.
The embodiments of the invention are defined by the appended claims.

In one example, the source identification address is indicative of a combination of at least two operating condition parameters, wherein the operating condition parameter comprises one of or a combination of at least part of remaining battery lifetime status of the first communication device; power class of the first communication device; and operation purpose of the first communication device; and a spatial location of the first communication device; temperature of the first communication device and/or user ID of a user of the first communication device. For example, the operating condition parameter may be all or a part of a spatial location of the first communication device. The operating condition parameter may be all or a part of a temperature of the first communication device. The operating condition parameter may be all or a part of a remaining battery lifetime status of the first communication device. The operating condition parameter may be all or a part of a power class of the first communication device. The operating condition parameter may be all or a part of an operational function indicator of the first communication device The operating condition parameter may be all or a part of a user ID of a user of the first communication device. For example, operating condition parameter may be some combination of all or a part of one or more of the enumerated operating condition parameters.

The first communication device may be a multi-user device that may be used by multiple users. In this case, after or as soon as a user is logged into the first communication device, the first communication device may generate the source identification address which indicates at least the user ID of the logged-in user. For example, the source identification address may in addition to the user ID indicate the operation purpose of the first communication device. This may allow a precise destined communication in the communication system. For example, only temperature sensors used by users having a given access right to the temperature sensor may communicate to each other, for example for security reasons.

For example, in case the source identification address is a combination of at least two operating condition parameters, the source identification address may have a hierarchical structure with the highest level being a selected one of the at least two operating condition parameters. For example, the at least two operating condition parameters may comprise the spatial location and the remaining battery lifetime status of the first communication device. In this case, a higher weight or importance or level may be assigned to the spatial location such that it is the highest level of the hierarchical structure of the source identification address. For example, if a device receives a data packet encoded with an address having the hierarchical structure described above, the device may first read the part of the address indicating the spatial location. If it turns out that the spatial location mentioned in the address does not fit or correspond with the location of the device, the device does not have to waste resources for reading the rest of the address. Greater numbers of operating condition parameters can be arranged in hierarchical structure in a similar manner.

According to one embodiment, the generation is performed on a periodic basis, wherein the frequency of repetition of the generating is determined based on the value of the operating condition parameter.

For example, the first communication device may repeatedly determine the remaining battery lifetime status of the first communication device. Each time the remaining battery lifetime changes by some threshold percent (e.g., by 20%), the first communication device may generate the source communication address to indicate the current remaining battery lifetime status.

In another example, the generation is repeated with a predetermined frequency (e.g. every hour or other time periods).

According to one embodiment, the generation comprises detecting a variation in the operating condition parameter; and generating the source identification address using a value quantifying the variation.

According to one embodiment, the spatial location comprises a ID assigned to the spatial location and/or geo-coordinates (geographic coordinates) of the first communication device.

For example, the source identification address may have a hierarchical structure (country, city, neighborhood, geo coordinates of the communication device etc.) with the highest level being the spatial location of the first communication device with the lowest granularity (e.g. country).

According to one embodiment, the geo-coordinates comprise at least the latitude, longitude and altitude of the first communication device.

According to one embodiment, the method further comprises generating by the first communication device a destination identification address indicative of a second operating condition parameter, and sending by the first communication device using the generated destination identification address data to a second communication device of the communication system, the second communication device having a source identification address that indicates the second operating condition parameter.

The second communication device also generates its own source identification address as described above with reference to the first communication device.

For example, the second operating condition parameter may be the same or different from the operating condition parameter used for the generation of the source identification address of the first communication device.

The source identification address of the second communication device may comprise at least a portion of the generated destination identification address. For example, the destination identification address may indicate an operational purpose of the second communication device the first communication device wishes to contact. For instance, a user of the first communication device may want to access weather status for the day. In this case, the second communication device may be a server or an apparatus that provides weather information. The source identification address of the second communication device may indicate the operational purpose (i.e., weather status generation), but in addition, may also indicate the spatial location and/or other operating condition parameter/s of the second communication device.

This embodiment may be advantageous as it may save time (e.g., inquiry time) that would otherwise be required by an inquiry process to discover other devices.

According to one embodiment, the generated destination identification address comprises a value of the second operating condition parameter, wherein the second communication device is operating under a condition corresponding to at least a portion of the second operating condition parameter that is used for generating the destination identification address.

The portion of the second operating condition parameter may comprise at least one value of the second operating condition parameter.

For example, the first communication device may communicate only with communication devices having remaining battery lifetime higher than a predetermined threshold value (e.g. 50% remaining battery life). In this case, in one embodiment, the second communication device may have either exactly 50% or more than 50% remaining battery lifetime.

According to one embodiment, the first and second communication devices communicate using direct communication.

The first and second communication devices may communicating via a direct radio link without action by the communication system. In other words, the direct communication may be performed between communication devices without passing through a network element of the communication system.

According to one embodiment, the method further comprises identifying, by the first communication device, in a first list of network addresses, a network address associated with a geographic area in the communication range of the first communication device; switching, by the first communication device, to an operation mode corresponding to a communication protocol enabling communication using the identified network address; sending, by the first communication device, using the identified network address a request to a first intermediate communication device for forwarding data to the second communication device using the generated destination identification address.

The communication range may be the range over which the first communication device is configured to communicate with another communication device. For example, the identified network address may correspond to the closest intermediate communication device to the first communication device. In another example, the identified network address may correspond to the intermediate communication device having the lowest processing load. The network address of the intermediate communication device may be an IP address or a Fiber Channel address of the IP network or Fiber channel network to which the first communication device is connected respectively.

This embodiment may be advantageous as it may provide a seamless integration of the present method into existing communication systems.

According to one embodiment, the method includes changing the first intermediate communication device's operation mode to correspond to the communication protocol for sending the data using the destination identification address.

For example, the first intermediate communication device may switch to the direct communication mode in order to forward the data to the second communication device.

According to one embodiment, the method further comprises in response to an unsuccessful connection to the second communication device, forwarding by the first intermediate communication device the data to another intermediate communication device for forwarding the data to the second communication device; and repeating the forwarding step until at least one of the following conditions is met: the data is forwarded to the second communication device; a number of intermediate communication devices to which the data is forwarded reaches a maximum number of hops. The maximum number of hops may be predefined by the first communication device or a network element of a communication network of the communication system. In an alternative example, the maximum number of hops may be determined by the first communication device or the network element according to a current load status for the communication network (e.g. the higher the load, the smaller the number of maximum number of hops). The load status may be a data traffic load status.

In another example, the maximum number of hops may be determined according to a required transmission delay for data transmission between the first communication device and the second communication device (e.g. the smaller the required transmission delay, the smaller the number of maximum number of hops).

An unsuccessful connection may be due to the fact that the second communication device is not in the range of the communication of the first intermediate communication device. Other conventional communication errors known to those skilled in the technical art of the disclosure may result in an unsuccessful connection.

In some embodiments, a communication device is configured to generate a source identification address for communication with the communication device, the source identification address being indicative of at least one value of an operating condition parameter of the communication device. The apparatus can be further configured to perform one or more of the methods described above.

In some embodiments, a communication system comprises at least a first and a second communication device of the above embodiment, wherein the first communication device is configured to generate a destination identification address indicative of a second devices' operating condition parameter, and send using the generated destination identification address data to a second communication device of the communication system having a source identification address that indicates the second operating condition parameter.

It is understood that one or more of the aforementioned embodiments may be combined as long as the combined embodiments are not mutually exclusive.

### Brief description of the drawings

In the following embodiments of the disclosure are explained in greater detail, by way of example only, making reference to the drawings in which:
Figure 1 shows an exemplary communication device,
Figure 2 illustrates a first example of a communication between two communication devices,
Figure 3 illustrates a first example of a communication between two communication devices, and
Figure 4 is flowchart of a method for operating a communication device.

### Detailed description

In the following, like numbered elements in these figures are either similar elements or perform an equivalent function: Elements which have been discussed previously will not necessarily be discussed in later figures if the function is equivalent.

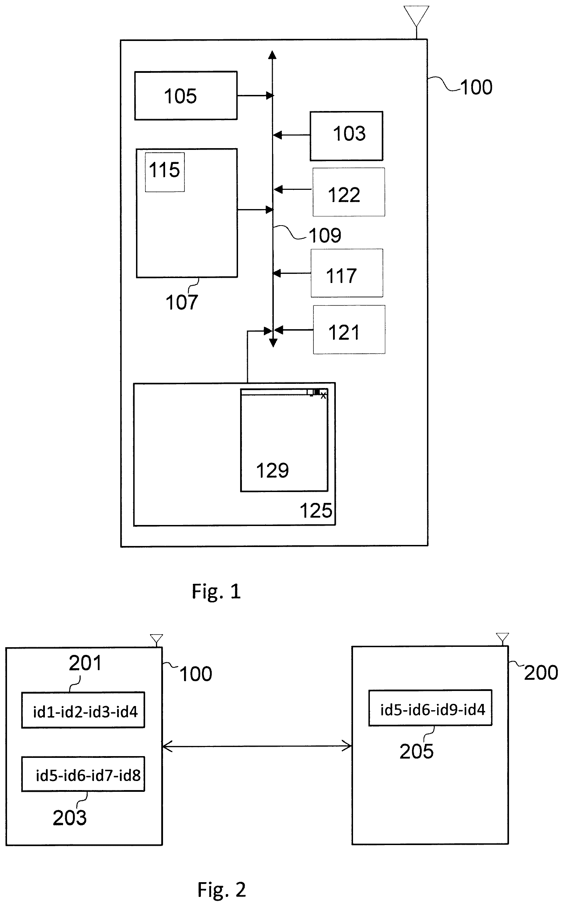

Fig. 1 shows an exemplary communication device 100 of a communication system. The communication system may comprise, for example, a cellular digital telecommunication system and/or digital direct wireless communication system that permits direct point-to-point communication (voice and/or data) between transceivers without the infrastructure associated with cellular digital telecommunication systems. The communication device 100 may comprise a processor 103, a transceiver 105, a memory 107, each capable of communicating with one or more components of the communication device 100. For example, all components may be coupled to a bidirectional system bus 109.

The processor 103 may be a microprocessor, a single core processor, a multicore processor or the like. The processor 103 may control the operation of the communication device 100. The transceiver 105 may be implemented as a transmitting and receiving component of the communication device 100.

The communication device 100 may further comprise a display device 125 which displays characters and images and the like, e.g., on a user interface 129. The display device 125 may be a touch screen display device.

The communication device 100 may comprise positioning unit 121 for determining the location of the communication device 100. The positioning unit 121 may use for example a GPS and/or Galileo and/or additional navigation satellite systems (GANSS) positioning technique.

The communication device 100 may further comprise a battery 122 for powering the communication device 100. For example, the first communication device may be powered by a solar power supply device including a solar panel and a rechargeable battery 122. In another example, the communication device 100 may be powered by any other power source.

For example, the communication device 100 may use the Mobile station power classes defined for the mobile stations or any other power class (e.g., a class Bluetooth device). A power class refers to a permissible power range at which a device may be configured to transmit. The device may use a power class as defined for example for a User Equipment (UE) (i.e., UE power class) or for an access point (e.g. Base station power class). For example, devices at a same power class (e.g. UE power class) may be mobile stations.

Memory 107 is configured to store a plurality of applications that are executable on the processor 103. The applications comprise an address generator application 115. The address generator 115 comprises instructions that, when executed, control the processor to generate a source and/or destination identification address that indicates the operating condition parameter of the communication device 100.

The generated source and/or destination identification address may be stored in a storage unit 117 of the communication device 100.

The source identification address may comprise one or more bytes. For example, the source identification address may be encoded in a format like "**id1-id2-id3**", where the term "id" indicates an operating condition parameter of the communication device. For example, "**id1**" may indicate the geo-coordinates of the communication device 100, "**id2**" may indicate the remaining lifetime of the battery 122 and "**id3**" may indicate the power class of the communication device 100. In another example, the identification address may comprise a single id (e.g., "**id1**") indicating a single operating condition parameter of the communication device 100. The ids may made up of bytes that encodes a value of the operating condition parameter.

The communication device 100 may operate in a direct communication mode and/or network communication mode using, for example, IP protocol. When operating in a given communication mode, the communication device 100 may be able to determine actual network or non-network protocol type corresponding to the communication mode, to interpret content (e.g., header) of the received data, and to communicate according to that protocol type.

Fig. 2 shows two communication devices 100 and 200 of the communication system. For example, the two communication devices 100 and 200 may be in a direct communication to each other such as a Car-to-Car communication for transferring information between two or more cars approaching a road crossing where each of the two communication devices 100 and 200 is in a separate car. A subscriber having the communication device 100 sitting in a car may send using the communication device 100 a request for information for vehicle speed (and possibly any other kind of sensor information) on a certain route, which the subscriber is following through his navigation device. Through the generated destination identification address 203 containing geo-coordinates, the subscriber may be able to address another subscriber/communication device located along the route. The subscriber would even be able to address all devices on the route he is driving.

In the illustrated example, the communication device 100 comprises a source identification address 201 and a destination identification address 203 generated by the communication device 100 as described above. The communication device 200 comprises a source identification address 205 generated by the second communication device 200 as described above.

The example source identification address 201 comprises a combination of ids, "id1-id2-id3-id4" that indicates the operating condition parameter of the communication device 100. The combination of ids may be referred to as an operating condition parameter; note that an individual id may also be referred to as an operating condition parameter as the source identification address and destination identification address may be defined by a single property of a communication device. The destination identification address 203 may be generated by the communication device 100 in order to send data to a device having a source identification address that indicates the operating condition parameter that is desired by the communication device 100 and that is indicated in the destination identification address 203.

For example, the two first ids e.g. id1-id2 and id5-id6 of the source and destination identification addresses 201-205 may identify individual portions of the operating condition parameter of the respective communication device. For instance, id5 may indicate the power class of the communication device 200 and id6 may indicate the remaining battery lifetime status of the communication device 200. The two last ids e.g., id3-id4 and id9-id4 may identify the manufacturer of the communication devices 100 and 200 respectively.

The communication devices 100 and 200 may comprise a communication interface, that communicatively connects the communication device 100 and 200 to each other or to other communication devices of the communication system.

For example, the data may be sent in packets in which the destination identification addresses are inserted. The communication device 200 will receive the data.

The following is a simple example in which a data packet is sent using the present method. In this example, the data packet is sent from communication device 100 to communication device 200.

The data packet may have the following example format:

| | | | | | | | |
|---|---|---|---|---|---|---|---|
| preamble | Frame delimiter | Property1 code | Property1 type descriptor | Property 2 code | Property2 type descriptor | Property3 code | Property3 type descriptor |

In the example, format, the property codes represent the data or value corresponding to the property type. The type descriptors indicate at least one of the operational condition parameters e.g. geo-coordinates, battery lifetime, voltage, power consumption, temperature, etc. of the source identification address (or destination identification address not shown). For example, the property1 type descriptor may indicate that the geo-coordinates of the communication device 100 are detailed according to the format. The property1 code would provide the actual coordinates. The property2 type descriptor may indicate the battery lifetime status of the communication device 100 is detailed according to the format. The property 2 code would then provide the value of the battery lifetime status (e.g., 20% battery life remaining).

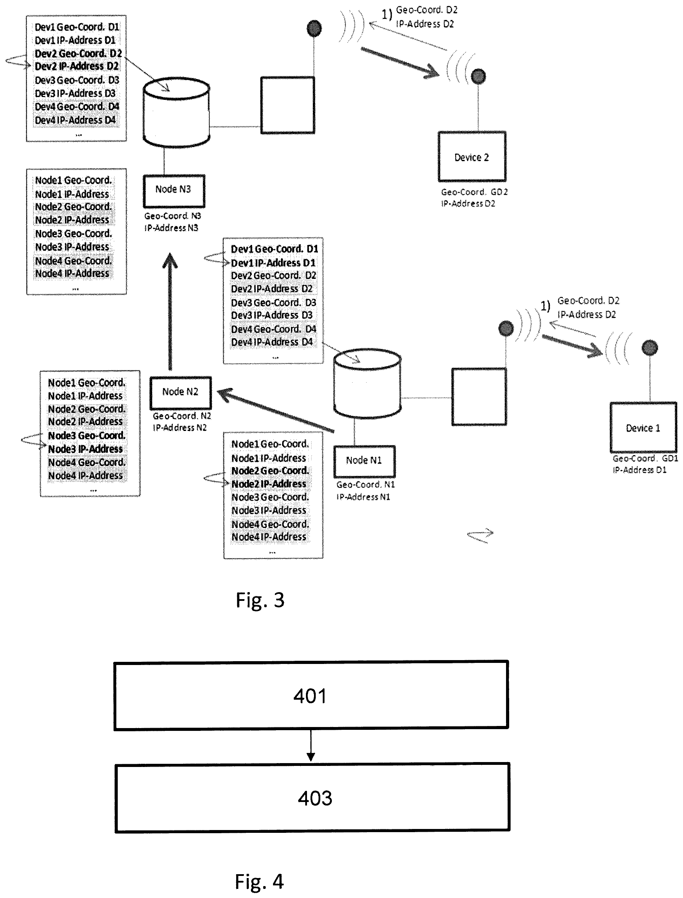

In Fig. 3, not disclosing an embodiment of the invention, a communication device Device1 located at geo-coordinates GD1 (longitude/latitude/altitude) may communicate with a communication device Device2 located at geo-coordinates GD2 (longitude/latitude/altitude), irrespective of the remote parties' identity. As illustrated, the communication devices (Device1 and Device2) may comprise respective source identification addresses that indicate a combination of IP address of the communication device as well as the geo-coordinates of the communication device.
The communication device Device1 may generate a destination identification address based on a operating condition parameter (e.g., power class) in order to communicate data to the communication device Device2. The operating condition parameter that is utilized to generate the destination identification address may be predefined. The destination identification address may be the same as the source identification address of the communication device Device2 or may comprise at least part of that source identification address for communication device Device2. In an alternative example, the generating of the destination identification address comprises selecting the destination identification address from a look-up table of identification addresses that correspond to the operating condition parameter used by communication devices to generate source identification addresses. The look-up table of destination identification addresses may be stored in a server in the network. Said look-up table is filled based on reports from communication devices of the network. Also, every node in the network may maintain a lookup table containing information about IP addresses and geo-coordinates of its next hop nodes.

To communicate the information to the communication device Device2, the communication device Device1 informs its next node 'Node1'of the network to which the communication device Device1 may connect. 'Node1' checks in its lookup table for the IP address of the next node ('Node2') lying in the direction of GD2 and forwards the information to 'Node2' which again checks in its lookup-table for the IP-address of the following node, and so on. Finally, the last node checks for the destination identification address that is destined to the communication device Device2 located at GD2 and forwards the information to the communication device 'Device2'. The information may also be received by a third communication device Device3 (not shown) having a source identification address that matches the destination identification address.

Fig. 4 is a flowchart of a method for operating a communication device e.g. 100 in a communication system.

In step 401, an operating condition parameter of the communication device may be determined. In one embodiment, the operating condition parameter may comprise the operating system (e.g., Android) of the communication device.

In step 403, the communication device automatically generates a source identification address for communication with the first communication device. The source identification address indicates the operating condition parameter.

The operating condition parameter may comprise, for example, an application ID of an application installed on the communication device. For example, the communication device may be a smart phone and the application may be a mobile application such as an application enabling social communication. In this way, the communication in the communication system may be controlled such that data can be exchanged only with the communication devices having said application installed therein (i.e., those communication devices having source identification addresses indicating said mobile application).

### List of reference numerals

- 100: communication device
- 103: processor
- 105: transceiver
- 107: memory
- 109: bus
- 115: address generator application
- 117: storage unit
- 121: positioning unit
- 122: battery
- 125: display device
- 129: user interface
- 200: communication device
- 201: source identification address
- 203: destination identification address
- 205: source identification address
- N1-3: node
- Device1-2: communication device.

## Claims

1. A method for operating a first communication device (100, 200) in a communication system, the method comprising:
generating, by the first communication device (100, 200), a source identification address (201, 205) for communication with the first communication device (100, 200), the source identification address (201, 205) being a combination of at least two operating condition parameters of the first communication device (100, 200), the operating condition parameter comprising one or more of the group consisting of:
- remaining battery lifetime status of the first communication device (100, 200);
- power class of the first communication device (100, 200); and
- operational purpose of the first communication device (100, 200), the source identification address having a hierarchical structure with the highest level being a selected one of the at least two operating condition parameters.

2. The method of claim 1, wherein the source identification address (201, 205) that is generated is indicative of the at least one value of the operating condition parameter of the first communication device (100, 200) and at least one value indicating at least a part of a spatial location of the first communication device (100, 200).

3. The method of claim 1 or 2, wherein the generating is performed on a periodic basis, wherein the frequency of repetition of the generating is determined based on the at least one value of the operating condition parameter or the at least one value indicating the spatial location.

4. The method of claim 1, 2 or 3, the generating comprising:
- detecting a variation in the at least one value of the operating condition parameter or the at least one value indicating the spatial location; and
- generating the source identification address (201, 205) based on the variation or a value quantifying the variation.

5. The method of any of preceding claims 2-4, wherein the spatial location comprises at least one of a group consisting of a ID assigned to the spatial location and geo-coordinates of the first communication device (100, 200).

6. The method of claim 5, wherein the geo-coordinates comprise at least the latitude, longitude and altitude of the first communication device (100, 200).

7. The method of any of the preceding claims, further comprising
- generating by the first communication device (100) a destination identification address (203) indicative of at least one second value for the operating condition parameter, and
- sending by the first communication device (100) using the generated destination identification address (203) data to a second communication device (200) of the communication system, the second communication device having a source identification address (205) that indicates the at least one second value of the operating condition parameter.

8. The method of claim 7, wherein the generated destination identification address (203) comprises the at least one second value for the operating condition parameter, wherein the second communication device (200) is operating under a condition corresponding to at least a portion of the at least one second value of the operating condition parameter that is used for generating the destination identification address.

9. The method of claims 7-8, wherein the first and second communication devices (100, 200) communicate using direct communication.

10. The method of claims 7-9, further comprising:
- identifying, by the first communication device (100), in a first list of network addresses, a network address associated with a geographic area in communication range of the first communication device (100);
- switching, by the first communication device (100), to an operation mode corresponding to a communication protocol enabling communication using the identified network address;
- sending, by the first communication device (100), using the identified network address a request to a first intermediate communication device (N1) having the identified network address for forwarding data to the second communication device (200) using the generated destination identification address.

11. The method of claim 10, further comprising changing the first intermediate communication device's (N1's) operation mode to correspond to the communication protocol for sending the data using the destination identification address.

12. The method of claim 10 or 11, further comprising: in response to an unsuccessful connection to the second communication device, forwarding by the first intermediate communication device (N1) the data to another intermediate communication device (N2) for forwarding the data to the second communication device; and iteratively repeating the forwarding step until at least one of the following conditions is met:
- the data is forwarded to the second communication device (200);
- a number of intermediate communication devices to which the data is forwarded reaches a maximum number of hops.

13. A communication device (100, 200) comprising a processor configured to generate a source identification address (201, 205) for communication with the communication device (100, 200), the source identification address (201, 205) being a combination of at least two operating condition parameters of the communication device (100, 200), the operating condition parameter comprising at least part of one or more of the group consisting of:
- remaining battery lifetime status of the communication device (100, 200);
- power class of the communication device (100, 200); and
- operational purpose of the first communication device (100, 200), the source identification address having a hierarchical structure with the highest level being a selected one of the at least two operating condition parameters.

14. A communication system comprising a plurality of communication devices (100, 200) of claim 13, wherein a first communication device (100) is configured to
- generate a destination identification address (203) indicative of at least one second value for the operating condition parameter, and
- forward using the generated destination identification (203) address data to a second communication device (200) of the communication system, the source identification address (205) of the second communication device indicating the at least one second value of the operating condition parameter.

15. The communication device (100, 200) of claim 13, wherein the processor is configured to generate the source identification address (201, 205) based on the at least one value of the operating condition parameter of the first communication device (100, 200) and at least a part of a value indicating spatial location of the first communication device (100, 200).

## Patentansprüche

1. Verfahren zum Betreiben einer ersten Kommunikationsvorrichtung (100, 200) in einem Kommunikationssystem, wobei das Verfahren umfasst:
Erzeugen, durch die erste Kommunikationsvorrichtung (100, 200), einer Quellidentifikationsadresse (201, 205) für die Kommunikation mit der ersten Kommunikationsvorrichtung (100, 200), wobei die Quellidentifikationsadresse (201, 205) eine Kombination von mindestens zwei Betriebsbedingungsparametern der ersten Kommunikationsvorrichtung (100, 200) ist, wobei der Betriebsbedingungsparameter mindestens einen Teil oder mehr der Gruppe umfasst, bestehend aus:
- Batterielebensdauerstatus der ersten Kommunikationsvorrichtung (100, 200);
- Leistungsklasse der ersten Kommunikationsvorrichtung (100, 200); und
- Betriebszweck der ersten Kommunikationsvorrichtung (100, 200), wobei die Quellidentifikationsadresse eine hierarchische Struktur aufweist, wobei die höchste Stufe ausgewählt wird aus den mindestens zwei Betriebsbedingungsparametern.

2. Verfahren nach Anspruch 1, wobei die Quellidentifikationsadresse (201, 205), die erzeugt wird, indikativ ist für mindestens einen Wert des Betriebsbedingungsparameters der ersten Kommunikationsvorrichtung (100, 200) und mindesten einen Wert, der mindestens einen Teil einer räumlichen Lage der ersten Kommunikationsvorrichtung (100, 200) anzeigt.

3. Verfahren nach Anspruch 1 oder 2, wobei das Erzeugen auf regelmäßiger Basis durchgeführt wird, wobei die Wiederholungsfrequenz des Erzeugens bestimmt wird auf Grundlage des mindestens einen Wertes des Betriebsbedingungsparameters oder des mindestens einen Wertes, der die räumliche Lage anzeigt.

4. Verfahren nach Anspruch 1, 2 oder 3, wobei das Erzeugen umfasst:
- Erkennen einer Variation in dem mindestens einen Wert des Betriebsbedingungsparameters oder in dem mindestens einen Wert, der die räumliche Lage anzeigt; und
- Erzeugen der Quellidentifikationsadresse (201, 205) auf Grundlage der Variation oder eines Wertes, der die Variation quantifiziert.

5. Verfahren nach einem beliebigen der Ansprüche 2-4, wobei die räumliche Lage umfasst mindestens eines aus der Gruppe, bestehend aus einer ID, die der räumlichen Lage zugewiesen ist, und Geokoordinaten der ersten Kommunikationsvorrichtung (100, 200).

6. Verfahren nach Anspruch 5, wobei die Geokoordinaten umfassen mindestens den Breitengrad, den Längengrad und die Höhe der ersten Kommunikationsvorrichtung (100, 200).

7. Verfahren nach einem beliebigen der vorhergehenden Ansprüche, weiterhin umfassend
- Erzeugen durch die erste Kommunikationsvorrichtung (100) einer Zielidentifikationsadresse (203), die indikativ ist für mindestens einen zweiten Wert für den Betriebsbedingungsparameter, und
- Senden durch die erste Kommunikationsvorrichtung (100), unter Verwenden der erzeugten Zielidentifikationsadresse (203), von Daten an eine zweite Kommunikationsvorrichtung (200) des Kommunikationssystems, wobei die zweite Kommunikationsvorrichtung ein Quellidentifikationsadresse (205) aufweist, die den mindestens einen zweiten Wert des Betriebsbedingungsparameters anzeigt.

8. Verfahren nach Anspruch 7, wobei die erzeugte Zielidentifikationsadresse (203) umfasst den mindestens einen zweiten Wert für den Betriebsbedingungsparameter, wobei die zweite Kommunikationsvorrichtung (200) betrieben wird unter einer Bedingung, die mindestens einem Teil des mindestens einen zweiten Wertes des Betriebsbedingungsparameters entspricht, der verwendet wird zum Erzeugen der Zielidentifikationsadresse.

9. Verfahren nach den Ansprüchen 7-8, wobei die erste und die zweite Kommunikationsvorrichtung (100, 200) kommunizieren unter Verwenden einer direkten Kommunikation.

10. Verfahren nach Anspruch 7-9, weiterhin umfassend:
- Identifizieren, durch die erste Kommunikationsvorrichtung (100), in einer ersten Liste von Netzwerkadressen, einer Netzwerkadresse, die verbunden ist mit einem geographischen Bereich in einem Kommunikationsbereich der ersten Kommunikationsvorrichtung (100);
- Umschalten, durch die erste Kommunikationsvorrichtung (100), auf einen Betriebsmodus, entsprechend einem Kommunikationsprotokoll, das die Kommunikation ermöglicht unter Verwenden der identifizierten Netzwerkadresse;
- Senden, durch die erste Kommunikationsvorrichtung (100), unter Verwenden der identifizierten Netzwerkadresse, einer Anforderung an eine erste Zwischenkommunikationsvorrichtung (N1), welche die identifizierte Netzwerkadresse aufweist, zum Weiterleiten von Daten an die zweite Kommunikationsvorrichtung (200) unter Verwenden der erzeugten Zielidentifikationsadresse.

11. Verfahren nach Anspruch 10, weiterhin umfassend das Ändern des Betriebsmodus der ersten Zwischenkommunikationsvorrichtung (N1's), um dem Kommunikationsprotokoll zum Senden von Daten zu entsprechen unter Verwenden der Zielidentifikationsadresse.

12. Verfahren nach Anspruch 10 oder 11, weiterhin umfassend:
als Antwort auf eine nicht erfolgreiche Verbindung mit der zweiten Kommunikationsvorrichtung, Weiterleiten durch die erste Zwischenkommunikationsvorrichtung (N1) der Daten auf eine andere Zwischenkommunikationsvorrichtung (N2) zum Weiterleiten der Daten auf die zweite Kommunikationsvorrichtung; und
iteratives Wiederholen des Weiterleitungsschrittes, bis mindestens eine der folgenden Bedingungen erfüllt wird:
- die Daten werden an die zweite Kommunikationsvorrichtung (200) weitergeleitet;
- eine Anzahl von Zwischenkommunikationsvorrichtungen, an welche die Daten weitergeleitet werden, erreicht eine maximale Anzahl von Hops.

13. Kommunikationsvorrichtung (100, 200), umfassend einen Prozessor, der konfiguriert ist zum Erzeugen einer Quellidentifikationsadresse (201, 205) für die Kommunikation mit der Kommunikationsvorrichtung (100,200), wobei die Quellidentifikationsadresse (201, 205) eine Kombination ist aus mindestens zwei Betriebsbedingungsparametern der Kommunikationsvorrichtung (100, 200) ist, wobei der Betriebsbedingungsparameter mindestens einen Teil oder mehr der Gruppe umfasst, bestehend aus:
- Batterielebensdauerstatus der Kommunikationsvorrichtung (100, 200);
- Leistungsklasse der Kommunikationsvorrichtung (100, 200); und
- Betriebszweck der ersten Kommunikationsvorrichtung (100, 200), wobei die Quellidentifikationsadresse eine hierarchische Struktur aufweist, wobei die höchste Stufe ausgewählt wird aus den mindestens zwei Betriebsbedingungsparametern.

14. Kommunikationssystem, umfassend eine Vielzahl von Kommunikationsvorrichtungen (100, 200) nach Anspruch 13, wobei eine erste Kommunikationsvorrichtung (100) konfiguriert ist zum
- Erzeugen einer Zielidentifikationsadresse (203), die indikativ ist für mindestens einen zweiten Wert für den Betriebsbedingungsparameter, und
- Weiterleiten, unter Verwenden der erzeugten Zielidentifikationsadresse (203), von Daten an eine zweite Kommunikationsvorrichtung (200) des Kommunikationssystems, wobei die Quellidentifikationsadresse (205) der zweiten Kommunikationsvorrichtung den mindestens einen zweiten Wert des Betriebsbedingungsparameters anzeigt.

15. Kommunikationsvorrichtung (100, 200) nach Anspruch 13, wobei der Prozessor konfiguriert ist zum Erzeugen der Quellidentifikationsadresse (201, 205) auf Grundlage des mindestens einen Wertes des Betriebsbedingungsparameters der ersten Kommunikationsvorrichtung (100, 200) und mindestens eines Teils eines Wertes, der die räumliche Lage der ersten Kommunikationsvorrichtung (100, 200) anzeigt.

## Revendications

1. Procédé d'exploitation d'un premier dispositif de communication (100, 200) dans un système de communication, le procédé comprenant les étapes suivantes :
générer, par le premier dispositif de communication (100, 200), une adresse d'identification de source (201, 205) pour la communication avec le premier dispositif de communication (100, 200), l'adresse d'identification de source (201, 205) étant une combinaison d'au moins deux paramètres de condition de fonctionnement du premier dispositif de communication (100, 200), le paramètre de condition de fonctionnement comprenant un ou plusieurs éléments du groupe composé des éléments suivants :
- un état d'autonomie de batterie restante du premier dispositif de communication (100, 200) ;
- une catégorie de puissance du premier dispositif de communication (100, 200) ; et
- un objectif opérationnel du premier dispositif de communication (100, 200), l'adresse d'identification de source ayant une structure hiérarchique dont le plus haut niveau est un paramètre de condition de fonctionnement sélectionné parmi les au moins deux paramètres de condition de fonctionnement.

2. Procédé selon la revendication 1, dans lequel l'adresse d'identification de source (201, 205) qui est générée indique la ou les valeurs du paramètre de condition de fonctionnement du premier dispositif de communication (100, 200) et au moins une valeur indiquant au moins une partie d'une localisation spatiale du premier dispositif de communication (100, 200).

3. Procédé selon la revendication 1 ou 2, dans lequel la génération est réalisée sur une base périodique, la fréquence de répétition de la génération étant déterminée en fonction de la ou des valeurs du paramètre de condition de fonctionnement ou de la ou des valeurs indiquant la localisation spatiale.

4. Procédé selon la revendication 1, 2 ou 3, la génération comprenant les étapes suivantes :
- détecter une variation dans la ou les valeurs du paramètre de condition de fonctionnement ou la ou des valeurs indiquant la localisation spatiale ; et
- générer l'adresse d'identification de source (201, 205) en fonction de la variation ou d'une valeur quantifiant la variation.

5. Procédé selon l'une quelconque des revendications précédentes 2 à 4, dans lequel la localisation spatiale comprend au moins un élément d'un groupe composé d'un identifiant attribué à la localisation spatiale et de coordonnées géographiques du premier dispositif de communication (100, 200).

6. Procédé selon la revendication 5, dans lequel les coordonnées géographiques comprennent au moins la latitude, la longitude et l'altitude du premier dispositif de communication (100, 200).

7. Procédé selon l'une quelconque des revendications précédentes, comprenant en outre les étapes suivantes :
- générer par le premier dispositif de communication (100) une adresse d'identification de destination (203) indiquant au moins une deuxième valeur pour le paramètre de condition de fonctionnement, et
- envoyer par le premier dispositif de communication (100) en utilisant l'adresse d'identification de destination (203) générée des données à un deuxième dispositif de communication (200) du système de communication, le deuxième dispositif de communication ayant une adresse d'identification de source (205) qui indique la ou les deuxièmes valeurs du paramètre de condition de fonctionnement.

8. Procédé selon la revendication 7, dans lequel l'adresse d'identification de destination (203) générée comprend la ou les deuxièmes valeurs pour le paramètre de condition de fonctionnement, dans lequel le deuxième dispositif de communication (200) fonctionne dans une condition correspondant à au moins une partie de la ou des deuxièmes valeurs du paramètre de condition de fonctionnement qui est utilisé pour générer l'adresse d'identification de destination.

9. Procédé selon les revendications 7 à 8, dans lequel le premier et le deuxième dispositifs de communication (100, 200) communiquent en utilisant une communication directe.

10. Procédé selon les revendications 7 à 9, comprenant en outre les étapes suivantes :
- identifier, par le premier dispositif de communication (100), dans une première liste d'adresses réseau, une adresse réseau associée à une zone géographique à portée de communication du premier dispositif de communication (100) ;
- basculer, par le premier dispositif de communication (100), dans un mode de fonctionnement correspondant à un protocole de communication permettant la communication à l'aide de l'adresse réseau identifiée ;
- envoyer, par le premier dispositif de communication (100), à l'aide de l'adresse réseau identifiée une demande à un premier dispositif de communication intermédiaire (N1) possédant l'adresse réseau identifiée pour transmettre des données au deuxième dispositif de communication (200) à l'aide de l'adresse d'identification de destination générée.

11. Procédé selon la revendication 10, comprenant en outre un changement de mode de fonctionnement du premier dispositif de communication intermédiaire (N1) pour correspondre au protocole de communication en vue d'envoyer les données à l'aide de l'adresse d'identification de destination.

12. Procédé selon la revendication 10 ou 11, comprenant en outre les étapes suivantes :
en réponse à un échec de connexion au deuxième dispositif de communication, transmettre par le premier dispositif de communication intermédiaire (N1) les données à un autre dispositif de communication intermédiaire (N2) en vue de transmettre les données au deuxième dispositif de communication ; et
répéter de façon itérative l'étape de transmission jusqu'à ce qu'au moins une des conditions suivantes soit satisfaite :
- les données sont transmises au deuxième dispositif de communication (200) ;
- le nombre de dispositifs de communication intermédiaires auxquels les données sont transmises atteint un nombre maximal de sauts.

13. Dispositif de communication (100, 200) comprenant un processeur configuré pour générer une adresse d'identification de source (201, 205) pour la communication avec le dispositif de communication (100, 200), l'adresse d'identification de source (201, 205) étant une combinaison d'au moins deux paramètres de condition de fonctionnement du dispositif de communication (100, 200), le paramètre de condition de fonctionnement comprenant au moins une partie d'un ou plusieurs éléments du groupe composé des éléments suivants :
- un état d'autonomie de batterie restante du premier dispositif de communication (100, 200) ;
- une catégorie de puissance du premier dispositif de communication (100, 200) ; et
- un objectif opérationnel du premier dispositif de communication (100, 200), l'adresse d'identification de source ayant une structure hiérarchique dont le plus haut niveau est un paramètre de condition de fonctionnement sélectionné parmi les au moins deux paramètres de condition de fonctionnement.

14. Système de communication comprenant une pluralité de dispositifs de communication (100, 200) selon la revendication 13, dans lequel un premier dispositif de communication (100) est configuré pour :
- générer une adresse d'identification de destination (203) indiquant au moins une deuxième valeur pour le paramètre de condition de fonctionnement, et
- transmettre à l'aide de l'adresse d'identification de destination (203) générée des données à un deuxième dispositif de communication (200) du système de communication, l'adresse d'identification de source (205) du deuxième dispositif de communication indiquant la ou les deuxièmes valeurs du paramètre de condition de fonctionnement.

15. Dispositif de communication (100, 200) selon la revendication 13, dans lequel le processeur est configuré pour générer l'adresse d'identification de source (201, 205) en fonction de la ou des valeurs du paramètre de condition de fonctionnement du premier dispositif de communication (100, 200) et d'au moins une partie d'une valeur indiquant la localisation spatiale du premier dispositif de communication (100, 200).
